# EUROPÄISCHE PATENTSCHRIFT

(11) **EP 2 262 842 B1**
(45) Veröffentlichungstag und Bekanntmachung des Hinweises auf die Patenterteilung: **24.01.2018**
(21) Anmeldenummer: 09724858.7
(22) Anmeldetag: 14.03.2009
(51) Int. Cl.: C08G 18/08, C08G 18/10, C08G 18/30, C08G 18/76, C08G 18/38

(54) **2,2'-MDI-BASIERTE ISOCYANAT-MISCHUNGEN UND IHRE HERSTELLUNG SOWIE VERWENDUNG**
2,2'-MDI-BASED ISOCYANATE MIXTURES AND THE PRODUCTION AND USE THEREOF
MÉLANGES D'ISOCYANATES À BASE DE 2,2'-MDI, LEUR PRODUCTION ET LEUR UTILISATION

(30) Priorität: 28.03.2008 DE 102008016051
(43) Veröffentlichungstag der Anmeldung: 22.12.2010
(73) Patentinhaber: Polytex Sportbeläge Produktions-GmbH, 47929 Grefrath (DE)
(72) Erfinder: FINDER, Zdenka, 86701 Rohrenfels (DE); KRAUSE, Jens, 26540 Mours St. Eusebe (FR); FAEHLING, Friedhelm, 51554 Nerezine (HR); SCHMIDT, Manfred, 41540 Dormagen (DE); WEGENER, Dirk, 40789 Monheim (DE)
(74) Vertreter: Richardt Patentanwälte PartG mbB
(86) Internationale Anmeldenummer: PCT/EP2009/001878
(87) Internationale Veröffentlichungsnummer: WO 2009/118112

(56) Entgegenhaltungen:
- EP-A- 0 550 901
- EP-A- 1 506 957
- WO-A-2007/087987
- US-A- 5 817 734
- US-B1- 6 376 567

## Beschreibung

Die vorliegende Erfindung betrifft auf 2,2'-Diphenylmethandiisocyanat (2,2'-MDI) basierende Isocyanat-Mischungen, ein Verfahren zu ihrer Herstellung sowie ihre Verwendung zur Herstellung einer Elastikschicht für einen Sportboden.

Mit dem Begriff MDI werden eine große Zahl technisch bedeutsamer aber auch strukturell unterschiedlicher Isocyanate zusammengefasst. Darunter fallen sowohl Monomere, bei denen zwei aromatische Strukturelemente über eine Methylenbrücke miteinander verbunden sind (monomeres MDI), aber auch höhere Oligomere, bei denen mehr als zwei aromatische Strukturelemente über mehrere Methylenbrücken sukzessive miteinander verbunden sind (polymeres MDI).

Von Anwenderseite aus gesehen, besteht ein hohes Interesse daran, möglichst das 4,4'- und das 2,4 '-Isomer bzw. Mischungen dieser beiden Isomere zu erhalten.

Das Verhältnis von monomerem zu polymerem MDI, sowie die Anteile der 4,4'- und 2,4'-Isomeren im monomeren MDI kann durch Variation der Synthesebedingungen für die Herstellung der Vorstufe in weiten Grenzen variiert werden.

Die Auftrennung des bei der MDI-Synthese anfallenden Roh-MDIs erfolgt in weiten Teilen destillativ, wobei je nach technischem Aufwand sowohl fast isomerenreine Fraktionen mit Anteilen zum Beispiel an 4,4'-MDI von größer 97,5 Gew.-% oder auch Isomeren-Gemische mit 4,4'- und 2,4'-Anteilen von etwa je 50 Gew.-% abgetrennt werden können.

In der jüngsten Zeit besteht darüber hinaus ein wachsender Bedarf an dem 2,4'-Isomeren. Dies liegt im Wesentlichen in der unterschiedlichen Reaktivität der 2- und der 4 '-ständigen NCO-Gruppen des 2,4'-MDI begründet (ähnlich zu den Reaktivitätsunterschieden der 2- und 4-ständigen NCO- Gruppen des 2,4-Toluylendiisocyanat (TDI)).

Diese Reaktivitätsunterschiede erlauben bzw. erleichtern nämlich die Synthese von monomerarmen NCO-Prepolymeren (NCO-Prepolymere sind isolierbare Zwischenstufen auf dem Weg zu fertigen Endpolymeren - sie tragen noch unveränderte NCO-Gruppen an den jeweiligen Kettenenden.

Diese werden dadurch erhalten, dass man ein Polyol mit einem molaren Überschuss eines Isocyanats (bezogen auf die NCO-reaktiven bzw. die NCO-Gruppen) bei Raumtemperatur bis etwa 100°C umsetzt).

Bei asymmetrischen Isocyanaten (= Isocyanate mit mindesten zwei NCO-Gruppen unterschiedlicher Reaktivität), reagiert bevorzugt nur eine NCO-Gruppe mit dem Polyol, während die andere unverändert bleibt. Die Prepolymerisation lässt sich somit wesentlich einfacher steuern, als dies bei den meisten NCO-Prepolymeren des Standes der Technik der Fall ist, bei denen Isocyanate verwendet werden, deren NCO-Gruppen keine unterschiedlichen Reaktivitäten aufweisen: Diese enthalten im Vergleich dazu immer auch höhere Mengen freien, monomeren Diisocyanats.

Die Darstellung von monomerarmen, bis hin zu praktisch monomerfreien NCO-Prepolymeren ist im Falle von 2,4-TDI höchst wünschenswert, da dieses einen hohen Dampfdruck aufweist und Polymere mit unreagiertem 2,4-TDI eine hohe gesundheitliche Gefahr darstellen. Noch kritischer sind in diesem Zusammenhang die auf den aliphatischen Diisocyanaten wie zum Beispiel Hexamethylendiisocyanat (HDI) oder Isophorondiisocyanat (IPDI) basierenden NCO-Prepolymere zu sehen.

Dieser Faktor ist auch bei MDI zu beachten, doch kommt er auf Grund seines im Vergleich zu TDI geringeren Dampfdruckes nur in vermindertem Ausmaß zum Tragen.

Stand der Technik sind zur Zeit immer noch TDI bzw. monomerarme TDI-Prepolymere, relativ neu im Markt ist die Verwendung von reinen 2,4'-MDI-haltigen Prepolymeren.

Die Darstellung monomerarmer NCO-Prepolymere kann auf mehrere Arten erfolgen:
1. Durch Entfernung des freien monomeren Diisocyanats durch technisch aufwendige Dünnschicht- oder Kurzwegverdampfung. Diese Möglichkeit ist unabhängig davon einsetzbar, ob Diisocyanate mit gleich- oder unterschiedlich reaktiven NCO-Gruppen eingesetzt wurden. Hierfür können zum Beispiel auch Schleppmittel verwendet werden.
2. Durch Einsatz von Diisocyanaten mit unterschiedlich reaktiven NCO-Gruppen oder gleich reaktiven NCO-Gruppen und speziell gewählten stöchiometrischen Verhältnissen, zum Beispiel molare Verhältnisse von NCO- zu NCO-reaktiven-Gruppen unterhalb 2:1 und / oder gegebenenfalls unter spezieller Katalyse.
3. Kombinationen aus beiden Prozessen, zum Beispiel derart, dass der Anteil an freiem monomeren Diisocyanat nach Verfahren 2. zunächst auf ein bestimmtes Maß begrenzt wird und dann durch Verfahren 1. weiter minimiert wird.

Derartige Kombinationen können dann sinnvoll sein, wenn es gilt, die Viskosität der Prepolymere zu minimieren. Der Nachteil des Verfahrens 2 besteht prinzipiell nämlich darin, dass Umsetzungen bei stöchiometrischen Verhältnissen insbesondere von unterhalb 2:1 zu vermehrter Vorverlängerung führen und so eine deutlich erhöhte Viskosität des Reaktionsproduktes inhärent vorgegeben ist.

WO 01/40340 A2 gibt Beispiele für derartige Kombinationen von Verfahrensschritten, wobei in einer ersten Stufe das Diisocyanat unter Verwendung eines selektivitätssteigernden Katalysators zu einem NCO-Prepolymer umgesetzt wird, welches anschließend durch Dünnschichtverdampfung von überschüssigem Monomer befreit wird.

Für besonders kritische Anwendungen wie etwa im Lebensmittelbereich, werden besonders hohe Anforderungen an einen Restmonomergehalt gestellt (Stichwort Arbeitshygiene). Dies gilt in hohem Maße für TDI, aber teilweise auch für MDI (s.o.). Indiz hierfür sind zahlreiche Offenlegungsschriften bzw. Patente, die sich auch mit monomerarmen MDI-Prepolymeren befassen, zum Beispiel WO 03/006521, WO 03/033562, WO 03/055929, WO 03/051951, WO 93/09158 und EP 0 693 511 A1.

Aus den oben genannten Gründen steigt wie gesagt der Bedarf an dem 2,4'-MDI-Isomeren in jüngster Zeit an. Prozessbedingt hat dies aber grundsätzlich auch einen erhöhten Anteil an 2,2'-MDI zur Folge, welches bis dato als eher unbrauchbar angesehen wird. So heißt es in WO 2007/087987: Bei monomerem MDI überwiegen synthesebedingt die 4,4'- und 2,4 '-Isomeren. Weniger häufig und technisch weitgehend wertlos tritt in untergeordnetem Ausmaß auch das 2,2'-Isomere auf.

Dies liegt zum Teil daran, dass reines 2,2'-MDI technisch nicht verfügbar ist und 2,2'-haltige Formulierungen oft den Nachteil mit sich bringen, dass dieses Monomer deutlich langsamer und daher unvollständiger abreagiert. Dies kann beispielsweise zu unerwünschten Migrationen beim Verkleben von Lebensmittelpackungen führen oder das Abblasen von Schäumen verhindern.

Das 2,2'-MDI bzw. die dieses enthaltenden Formulierungen werden daher als Abfall angesehen und müssen aufwendig entsorgt werden.

Ein Beispiel betrifft die Möglichkeit der Verwendung von 2,2'-MDI zur Steuerung der Reaktionsgeschwindigkeit dieses enthaltender Isocyanat-Mischungen. Zur Steuerung der Reaktionsgeschwindigkeit von MDI-Gemischen werden im Stand der Technik unter anderem folgende Möglichkeiten beschrieben:
1. Mischungen mit TDI respektive TDI-Prepolymeren mit dem damit einhergehenden Nachteil erhöhter Toxizität. Aufgrund des höheren Dampfdruckes des TDI-Monomers führen auch erlaubte Restgehalte von 0,5 % zu Geruchsbelästigungen und Beeinträchtigungen.
2. Extender in Form von Weichmachern, respektive allgemein Kohlenwasserstoffe. Zum Einsatz kommen zum Beispiel Phthalate wie DINP oder alternative Weichmacher wie 2-Cyclohexan-Dicarbonsäurediisonynlester, Acetyltributylcitrat bzw. Lösemittel wie Ethylen-/Propylencarbonat, Di-Basic-Ester (DBE), Solventnaphtha und Benzine. Nachteile hierbei sind in erster Linie eine Minderung der Qualität sowie die Gefahr der Migration der nicht chemisch gebundenen Zusatzstoffe und die damit einhergehenden Eigenschaftsveränderungen über die Zeit.
3. Hohe Anteile an 2,4-MDI (>85 %), siehe WO 2007/087987 mit dem damit einhergehenden hohen Aufwand der Isomerentrennung und den damit verbundenen Kostennachteilen.

Aufgabe der vorliegenden Erfindung war es daher, Einsatzmöglichkeiten für das in der Industrie anfallende und bisher wenig erwünschte 2,2'-MDI zu finden. Die aufzufindenden Einsatzmöglichkeiten sollen dabei mit keiner Verschlechterung der Verarbeitungsbedingungen bzw. der (mechanischen) Eigenschaften der erhaltenen Produkte verbunden sein. Wenn möglich sollen sie eine Verbesserung gegenüber dem Stand der Technik darstellen.

Diese Aufgabe konnte durch die genannte Isocyanat-Mischung gelöst werden.

Ausführungsformen der Erfindung verwenden eine Isocyanat-Mischung mit einem NCO-Gehalt von 2 bis 22 Gew.-%, welche dadurch gekennzeichnet ist, dass sie
(a) NCO-Prepolymere mit einem NCO-Gehalt von 1,5 bis 18 Gew.-% und
(b) monomeres 2,2'-Diisocyanatodiphenylmethan (MDI) in einer Menge von 1 bis 40 Gew.-%, bezogen auf die Isocyanat-Mischung, enthält.

Bevorzugt weisen die Isocyanat-Mischungen einen NCO-Gehalt von 4 bis 17 Gew.-%, und die NCO-Prepolymere vorzugsweise einen NCO-Gehalt von 2,5 bis 15 Gew.-%. Die Isocyanat-Mischung enthält in einer Ausführungsform 2 - 25 Gew.-%, besonders bevorzugt 2 - 18 Gew.-% und ganz besonders bevorzugt 3 bis 15 Gew.-% monomeres 2,2'-MDI.

NCO-Prepolymere sind Prepolymere, die bei der Umsetzung von organischen Polyisocyanaten mit im Unterschuss eingesetzten NCO-reaktiven Verbindungen entstehen. Bevorzugt werden als Isocyanat 4,4'-Diphenylmethandiisocyanat (4,4'-MDI), 2,4'-MDI, 2,2'-MDI, polymeres MDI und Mischungen daraus, modifiziertes MDI (Die Modifizierung erfolgt zumeist durch den Einbau von Uretdion-, Isocyanurat- oder Allophanatgruppen.), Toluylendiisocyanat (TDI), Hexamethylendiisocyanat (HDI), Isophorondiisocyanat (IPDI), H12-MDI (hydriertes MDI) und Abmischungen der vorgenannten Verbindungen eingesetzt. Als NCO-reaktive Verbindungen werden vorzugsweise Polyole (Polyetherpolyole, Polyesterpolyole, Polycarbonatpolyole, Polyalkohole) und Polyetherpolyamine verwendet.

Für die Herstellung der Isocyanat-Prepolymere können bevorzugt Verbindungen mit im Mittel mindestens 1,5, bevorzugt zwei bis vier mit Isocyanatgruppen reaktiven Wasserstoffatomen, vorzugsweise hydroxyl- und/oder aminterminierte Verbindungen, wie Polyetherpolyole, Polyesterpolyole, Polyalkohole, Polyamine oder Mischungen dieser Verbindungen untereinander eingesetzt werden, wobei vorzugsweise Verbindungen mit einer Funktionalität von 2-4, insbesondere von 2 und mit einem Molekulargewicht zwischen 200 und 10000 g/mol, bevorzugt 500 bis 5000 g/mol, besonders bevorzugt zwischen 1000 und 4000 g/mol und ganz besonders bevorzugt von etwa 2000 g/mol eingesetzt werden. Besonders bevorzugt sind Polyetherdiole mit einem Molekulargewicht zwischen 1000 und 4000 g/mol.

Die Polyole können ggf. Verbindungen enthalten, die ausgewählt sind aus der Gruppe bestehend aus 1,2-Ethandiol, 1 ,2-Propandiol, 1,3-Propandiol, 1,4-Butandiol, Glycerin, Trimethylolpropan sowie Mischungen derselben.

Die Isocyanat-Mischung umfasst gemäß einer Ausführungsform darüber hinaus übliche Rheologieverbesserer (zum Beispiel Ethylencarbonat, Propylencarbonat, dibasische Ester, Zitronensäureester), Stabilisatoren (zum Beispiel Broenstedt- und Lewis-Säuren, wie etwa Salzsäure, Phosphorsäure, Benzoylchlorid, Organomineralsäuren wie Dibutylphosphat, weiterhin Adipinsäure, Äpfelsäure, Bernsteinsäure, Traubensäure oder Zitronensäure), UV-Schutzmittel (zum Beispiel 2,6-Dibutyl-4-methylphenol), Katalyatoren (zum Beispiel Trialkylamine, Diazabicyclooctan, Zinndioctoat, Dibutylzinndilaurat, N-Alkylmopholin, Blei-, Zink-, Zinn-, Kalzium-, Magnesiumoctoat, die entsprechenden Naphthenate und p-Nitrophenolat und/oder auch Quecksilberphenylneodecanoat), Hydrolyseschutzmittel (zum Beispiel sterisch gehinderte Carbodiimide), Emulgatoren, Füllstoffe (zum Beispiel Kreide), gegebenenfalls in das/den später zu bildende/n Polyurethan/Polyharnstoff einbaufähige Farbstoffe (die also über zerewitinoff-aktive Wasserstoffatome verfügen) und/oder Farbpigmente.

Weitere Hilfs- und Zusatzstoffe umfassen Emulgatoren, Schaumstabilisatoren, Zellregler und Füllstoffe. Eine Übersicht ist in G. Oertel, Polyurethane Handbook, 2<nd> Edition, Carl Hanser Verlag, München, 1994, Kap. 3.4., enthalten.

Eine Ausführungsform der Erfindung weist ein Verfahren zur Herstellung der genannten Isocyanat-Mischungen auf, welches dadurch gekennzeichnet ist, dass
A) ein organisches Polyisocyanat mit einer NCO-reaktiven Verbindung im Unterschuss umgesetzt wird,
B) zu dem unter A) entstandenen NCO-Prepolymer eine Mischung aus 20 bis 70 Gew.-% 2,2'-Diisocyanatodiphenylmethan (MDI), 30 bis 80 Gew.-% 2,4'-Diisocyanatodiphenylmethan (MDI) und 0 bis 10 Gew.-% 4,4'-Diisocyanatodiphenylmethan (MDI) zugegeben wird.

Eine weitere Ausführungsform der Erfindung weist ein Verfahren zur Herstellung der genannten Isocyanat-Mischung auf, welches dadurch gekennzeichnet ist, dass
A) eine Abmischung aus einer Mischung aus 20 bis 70 Gew.-% 2,2'-MDI, 30 bis 80 Gew.-% 2,4'-MDI und 0 bis 10 Gew.-% 4,4'-MDI und
   gegebenenfalls weiteren Polyisocyanaten aus der Gruppe bestehend aus 4,4'-Diphenylmethandiisocyanat (4,4'-MDI), 2,4'-MDI, 2,2'-MDI, polymeres MDI und Mischungen daraus, modifiziertes MDI, Toluylendiisocyanat (TDI), Hexamethylendiisocyanat (HDI), Isophorondiisocyanat (IPDI), H12-MDI (hydriertes MDI) und Abmischungen daraus mit
B) einer NCO-reaktiven Komponente umgesetzt wird.

In einem weiteren Beispiel sind Polyisocyanat-Polyadditions-Produkte erhältlich aus der Reaktion von
i) genannten Isocyanat-Mischungen und
ii) NCO-reaktiven Verbindungen,
   in Gegenwart von
iii) gegebenenfalls Katalysatoren,
iv) gegebenenfalls Füllstoffen,
v) gegebenenfalls Hilfs- und/oder Zusatzstoffen.

Als NCO-reaktive Verbindungen werden bevorzugt Kettenverlängerer und/oder Vernetzer mit einem Molekulargewicht von 62 bis 600 und einer Funktionalität von 2 bis 4 und gegebenenfalls Polyole aus der Gruppe bestehend aus Polyetherpolyolen, Polyesterpolyolen, Polyetheresterpolyolen, Polycarbonatpolyolen, Polyalkoholen, Polyaminen und Polyetherpolyaminen eingesetzt. Als NCO-reaktive Verbindung kann auch Wasser/Luftfeuchtigkeit allein oder in Verbindung mit anderen NCO-reaktiven Verbindungen dienen.

Ein weiteres Beispiel weist ein Verfahren zur Herstellung von Polyisocyanat-Polyadditions-Produkten auf, wobei
eine genannte Isocyanat-Mischung mit einer NCO-reaktiven Verbindung gegebenenfalls in Anwesenheit von Katalysatoren, Füllstoffen, Hilfs-und/oder Zusatzstoffen umgesetzt wird.

Das Verfahren wird vorzugsweise in Gegenwart üblicher Rheologieverbesserer, Stabilisatoren, UV-Schutzmittel, Katalyatoren, Hydrolyseschutzmittel, Emulgatoren, Füllstoffen, gegebenenfalls einbaufähige Farbstoffe (die also über zerewitinoff-aktive Wasserstoffatome verfügen) und/oder Farbpigmenten durchgeführt. Bezüglich der Vertreter dieser Verbindungs-klassen gilt das Gleiche, wie oben in Verbindung mit dem Verfahren zur Herstellung der genannten Isocyanat-Mischungen beschrieben.

Günstig beim Syntheseweg über Prepolymere als Bestandteile der genannten Isocyanat-Mischungen ist, dass ein Teil der Reaktionswärme bereits bei der Synthese des Prepolymers anfällt und somit die Exothermie beim eigentlichen Polymeraufbau kleiner ausfällt. Dies wirkt sich günstig auf die Geschwindigkeit des Molekulargewichtsaufbaus aus und ermöglicht längere Gießzeiten, stellt also einen Verarbeitungsvorteil dar. Nachteilig ist die ansteigende Reaktivität mit abnehmendem NCO-Gehalt.

Überraschend ist, dass sich bei gezieltem Einsatz bzw. durch gezielte Zugabe von 2,2'-MDI bzw. von Gemischen mit hohen Gehalten an 2,2'-MDI die Reaktionsgeschwindigkeit wunschgemäß steuern lässt und dadurch die vorgenannten Nachteile aus dem Stand der Technik wie Toxizität und Qualitätseinschränkungen vermieden werden. Besonders vorteilhaft ist, dass bei langen Reaktivitäten überraschenderweise vorteilhafte Entformungszeiten erzielt werden konnten. Überraschend war auch die besonders im Vergleich mit TDI-Prepolymeren verbesserte Hydrolysebeständigkeit.

Insbesondere lässt sich die Isocyanat-Mischung durch die Herabsetzung der Reaktionsgeschwindigkeit besser verarbeiten. Darüber hinaus wird dadurch auch die Umsetzung mit Verbindungen möglich, die gegenüber Isocyanat-Mischungen des Standes der Technik eine zu hohe Reaktivität aufweisen (zum Beispiel aminische Kettenverlängerer und/oder Vernetzer, wie z.B. Polyamine).

Der Einsatz der genannten Isocyanat-Mischungen hat den Vorteil von längeren Verarbeitungszeiten.

Das Verfahren kann zum Beispiel so erfolgen, dass man die Isocyanat-Mischung in Gegenwart von Wasser, insbesondere von Luftfeuchtigkeit, umsetzt. Der, Einsatz' von Luftfeuchtigkeit entspricht einer Verwendung der genannten Isocyanat-Mischung als 1K-System (denn abgesehen von der Isocyanat-Mischung werden keine weiteren extra zuzugebenden Reaktanden benötigt). Die Luftfeuchtigkeit reagiert in ausreichend langsamer Weise mit den NCO-Gruppen unter Bildung von Amin-Gruppen bei gleichzeitig akzeptabler Verfestigung. Zumeist werden diese Systeme vor Ort appliziert.

Alternativ kann das Verfahren auch so erfolgen, dass man die Isocyanat-Mischung mit mindestens einer Polyol-Komponente und/oder mindestens einer Aminkomponente, insbesondere eines Kettenverlängerers oder Vernetzers umsetzt. Dies entspricht dann einer Umsetzung in Form eines 2K-Systems. Es kann auch mit Wasser unter Druck vernetzt werden, wobei das so erhaltene Produkt danach vor Ort eingesetzt wird. Es sind auch Polyureasprühelastomere / Polyharnstoffsprühelastomere aus den genannten Isocyanat-Mischungen zugänglich.

In der Regel besteht hierbei die gegenüber Isocyanaten reaktive Komponente zu mindestens 50 Gew.-%, bevorzugt zu mindestens 80 Gew.-% aus einem oder mehreren der beschriebenen Polyetherdiole. Als Amine können die weiter unten als Komponente bi) näher beschriebenen Verbindungen eingesetzt werden. Die mittlere Funktionalität des resultierenden Prepolymeren a) ist zumeist kleiner 2,6, bevorzugt kleiner 2,2. Als Hauptkomponente der Amine b) wird bi) mindestens ein, vorzugsweise eine Mischung aus mindestens zwei Polyoxyalkylenaminen, sogenannten Polyetheraminen, d.h. von aminterminierten di- beziehungsweise höherfunktionellen Polyalkylen-, in der Regel Polyoxyethylen- beziehungsweise Polyoxypropylenoxiden, mit Molekulargewichten zwischen 200 und 5000 g/mol, insbesondere von 2000 bis 5000 g/mol, eingesetzt. Möglich ist auch der Einsatz von aminterminiertem PTHF. Die Amingruppen der Polyetheramine sind vor allem primäre Amin-Gruppen. Es kann auch, wie ausgeführt, nur ein einziges Polyetheramin verwendet werden. Die Polyetheramine bi) sind insbesondere Diamine oder Triamine. Derartige Verbindungen werden beispielsweise von der Firma Huntsman unter der Bezeichnung Jeffamine® bzw. von der Firma BASF als Polyetheramine vertrieben. Zumeist werden Polyamine durch katalytische Aminierung der entsprechenden Polyalkohole hergestellt. Die Polyoxyalkylenamine bi) dienen vorwiegend dem Aufbau der Weichphase in den Polyharnstoff-Sprühelastomeren. Zumindest ein Teil der verwendeten Amine bi) kann durch Polyetherole substituiert werden. Aminkomponenten, welche sowohl Polyetheramine als auch Polyetherole enthalten, werden, wie bereits ausgeführt, als Hybrid- oder gemischte Polyharnstoff-Polyurethan-Systeme bezeichnet. Bevorzugt beträgt der Anteil Amin- gegenüber hydroxylterminierter Polyether in der Aminkomponente in Ausführungsformen dieser Erfindung mehr als 50 Gew.-%, besonders bevorzugt besteht sie im Wesentlichen aus aminterminierten Polyethern. Weiterhin kann die Komponente b) niedermolekulare, in der Regel aromatische und diaminische, von bi) verschiedene Amine als Kettenverlängerer bii) enthalten. Diese Verbindungen haben zumeist ein Molekulargewicht im Bereich zwischen 150 und 500 g/mol. Die Amingruppen der Ketternverlängerer bii) können primär beziehungsweise sekundär sein. Der in Polyharnstoff-Sprühelastomeren zumeist eingesetzte Kettenverlängerer ist Diethylentoluoldiamin (DETDA). Als im Vergleich zu aliphatischen Aminen unreaktivere Komponente determiniert DETDA das Aushärteverhalten des Systems. Entsprechend kann die Gelzeit durch alternative Kettenverlängerer mit gegenüber Isocyanaten herabgesetzter Reaktivität gesteuert werden. Um lichtstabile Polyharnstoff-Sprühelastomere zu erhalten, können auch aliphatische Kettenverlängerer eingesetzt werden. Darüber hinaus können die bereits aufgeführten alternativen aminischen Kettenverlängerer wie 4,4'-Methylenbis-(2,6-diethyl)-anilin (MDEA), 4,4'-Methylenbis-(2,6-diisopropyl)-anilin (MDIPA), 4,4'-Methylen-bis-(3-chloro, 2,6-diethyl)-anilin (MCDEA), Dimethylthiotoluoldiamin (DMTDA, Ethacure® 300) oder reaktionsverzögernde Kettenverlängerer mit sekundären Aminfunktionen wie N,N'-Di(sec-butyl)-amino-biphenylmethan (DBMDA, Unilink® 4200) oder N,N'-Di-sec-butyl-p-phenylendiamin (Unilink® 4100) eingesetzt werden. Weitere, nicht zwingend erforderliche Formulierungsbestandteile sind beispielsweise - Verdünner, zumeist Reaktivverdünner, die, wenn angewendet, in der Regel der Isocyanatkomponente beigefügt werden. Beispiele für Reaktivverdünner der Isocyanatkomponente sind Alkylencarbonate. Allerdings kann die Zugabe von Reaktivverdünnern zu einer Verschlechterung der mechanischen Eigenschaften und der Alterungsbeständigkeit des Polyharnstoff-Sprühelastomers führen. Die Zugabe von Additiven zur Aminkomponente ist durch eine verarbeitbare Viskosität limitiert. Solche Addititive sind Pigmente, Haftvermittler, UV-Stabilisatoren, Antioxidanzien oder sonstige Füllstoffe. Die Komponente b) kann weiterhin insbesondere Abriebverbesserer enthalten. Als Abriebverbesserer kommen vorzugsweise mit Silikon modifizierte Alkohole, insbesondere Glykole, zum Einsatz. Das System wird in der Regel durch Sprühen appliziert, wobei die Komponenten unter hohem Druck und bei erhöhter Temperatur vor ihrem Austrag aus der Sprühpistole in deren Mischkopf vermischt und so zur Reaktion gebracht werden. Das volumetrische Verhältnis, in welchem Polyisocyanat und Aminkomponente versprüht werden, ist bevorzugt 1: 1, kann aber auch von 30:70 bis zu 70:30 Volumen%, bevorzugt aber bis zu 1,1:1 betragen. Die besprühte Oberfläche kann, insbesondere wenn sie feucht ist, zur Verbesserung der Adhäsion mit einen Primer vorbehandelt sein. Der Adhäsionsverbesserer kann, ebenfalls insbesondere für die Haftung auf feuchtem Untergrund, auch der B- beziehungsweise bevorzugt der R-Komponente zugegeben werden. Beispiele für Primer sind Siloxane und funktionalisierte Siloxane. Insbesondere zu nennen sind Epoxy-Amino- bzw. Vinyl - Alkoxysilane. Weitere Beispiele für kommerziell erhältliche Primer sind Titanate wie Neopentyl-(dially)oxytri(m-amino)phenyl-Titanat oder Zirkonate wie Neopentyl(diallyl)oxy tri(m-ethylen-diamino)ethyl-Zirkonat. Weitere mögliche Primer sind 1K- bzw. 2K-Polyurethansysteme (1-Komponenten bzw. 2-Komponenten-Systeme, siehe dazu weiter unten), Polyvinylamine, Polyacrylate bzw. Epoxidharze. Die Primer können vor der Applikation in Wasser oder anderen Lösungsmitteln dispergiert, emulgiert oder gelöst werden. Das Verhältnis von Isocyanat-Gruppen zu gegenüber Isocyanat-Gruppen reaktiven Gruppen, insbesondere, wie ausgeführt, Amingruppen, bei der Herstellung der Polyharnstoff-Sprühelastomere liegt zumeist zwischen 0,90 und 1,20, insbesondere zwischen 1,05 und 1,15. Es wurde gefunden, dass sich durch die Erhöhung des 2,2'-MDI Gehalts im verwendeten Isocyanat-Präpolymer die verminderte Reaktivität einer gegebenen Polyharnstoffformulierung in einer Zunahme der Gelzeit um mehrere Sekunden äußert.

Typische Anwendungsgebiete von Polyharnstoff-Sprühelastomeren sind Beschichtungen, insbesondere für Betonreparatur und Wasserschutz (Dach-, Parkdeckbeschichtungen, Brücken-, Tunnelreparaturen), sogenanntes "Secondary Containment" (Coatings für Auffangbecken von Chemikalien-, Abwasser- oder Öltanks beziehungsweise Gefahrgutladezonen), Korrosionsschutz (Ladeflächen von Frachtschiffen, LKWs, Pick-Ups und Eisenbahnwaggons) oder sogenanntes "Primary Containment" (Abwasserschächte, Kläranlagen). Polyharnstoff-Sprühelastomere sind Reaktionsprodukte eines mindestens difunktionellen Isocyanats mit einem mindestens difunktionellen primären oder sekundären Amin. Als Amine werden dabei üblicherweise hochmolekulare Polyetheramine und niedermolekulare aminische Kettenverlängerer eingesetzt. Die Aminkomponente, in der Technik häufig als R-Komponente bezeichnet, ist üblicherweise ein Gemisch aus primären aliphatischen Polyetheraminen und in der Regel aromatischen aminischen Kettenverlängerern. Hauptbestandteil der Aminkomponente einer Polyharnstoffformulierung ist eine Mischung von

Polyetheraminen, d.h. von aminterminierten di- beziehungsweise höherfunktionellen Polyethylenbeziehungsweise Polypropylenoxiden mit Molekulargewichten zwischen 200 und 5000 g/mol. Die aliphatischen Amine reagieren schneller als die aromatischen Komponenten der Kettenverlängerer und dienen vorwiegend dem Aufbau der Weichphase der Polyharnstoff-Sprühelastomere. Der in Polyharnstoffformulierung üblicherweise verwendete Kettenverlängerer ist Diethylentoluoldiamin (DETDA). Als im Vergleich zu aliphatischen Aminen unreaktivere Komponente determiniert DETDA das Aushärteverhalten des Systems. Um lichtstabile Polyharnstoffe zu synthetisieren, werden auch aliphatische Kettenverlängerer eingesetzt. Die zumeist aromatischen Kettenverlängerer werden vorwiegend in die Hartphase der Polyharnstoff-Sprühelastomere eingebaut. Polyharnstoff-Sprühelastomere werden, wie ausgeführt, zumeist als Beschichtungen eingesetzt. Dazu werden ihre flüssigen Ausgangskomponenten, üblicherweise als System oder Formulierung bezeichnet, unter hohem Druck vermischt, auf die zu beschichtende Oberfläche gesprüht und härten dort aus. Die Reaktionszeit beträgt dabei üblicherweise nur wenige Sekunden. Um optimale Verarbeitungs- und Produkteigenschaften zu erreichen, ist es wünschenswert, die Viskosität der flüssigen Ausgangskomponenten möglichst gering zu halten beziehungsweise die Viskositäten von Isocyanat- und Aminkomponente weitgehend anzugleichen. Nur so kann eine hinreichende Mischbarkeit der äußerst reaktiven Komponenten gewährleistet werden. Mischfehler führen zu einer verminderten Oberflächengüte. Niederviskose Systeme sind leichter prozessierbar, das heißt sie können bei geringeren Drücken und Temperaturen verarbeitet werden. Weiterhin sollte die Reaktion nicht zu rasch ablaufen, um eine optimale Verteilung der reaktiven Ausgangskomponenten vor deren vollständiger Aushärtung auf der zu beschichtenden Oberfläche zu gewährleisten.

Für die Herstellung von Gießelastomeren werden die genannten Isocyanat-Mischungen mit Kettenverlängerern umgesetzt.

In einer besonders bevorzugten Ausführungsform bei der Herstellung von PUR-Gießelastomeren nach dem genannten Verfahren werden die Isocyanat-Mischungen durch Anlegen eines verminderten Druckes bei Raumtemperatur oder bei erhöhter Temperatur zunächst entgast und dann - meist bei erhöhter Temperatur - mit einem Kettenverlängerer verrührt. Im Verfahren wird die Isocyanat-Mischung vorzugsweise auf eine Temperatur von 40°C bis 110°C erwärmt und unter Rühren unter Vakuum entgast. Danach wird der Kettenverlängerer und/oder Vernetzer zugegeben, wobei dieser gegebenenfalls auf Temperaturen von typischerweise mindestens 5°C oberhalb seines Schmelzpunktes erwärmt wird. Das Reaktionsgemisch wird offen im Freien ausgegossen und/oder in offene bzw. geschlossene Formen gegeben.

Als Kettenverlängerer sind bevorzugt aromatische aminische Kettenverlängerer wie zum Beispiel Diethyltoluoldiamin (DETDA), 3,3'-Dichloro-4,4'-diamino-diphenylmethan (MBOCA), 3,5-Diamino-4-chloro-isobutylbenzoat, 4-Methyl-2,6-bis(methylthio)-1,3-diaminobenzol (Ethacure 300), Trimethylenglykol-di-p-aminobenzoat (Polacure 740M) und 4,4'-Diamino-2,2'-dichloro-5,5'-diethyldiphenylmethan (MCDEA). Besonders bevorzugt sind MBOCA und 3,5-Diamino-4-chloroisobutylbenzoat. Aliphatische aminische Kettenverlängerer können ebenfalls eingesetzt oder mitverwendet werden. Der Einsatz von Aminen ist deshalb möglich, da die genannten Isocyanat-Mischungen eine gegenüber bekannten Prepolymeren deutlich niedrigere Reaktivität besitzen. Dies erst erlaubt die Umsetzung auch mit hoch reaktiven Aminen. Dies ist mit den bekannten Prepolymeren oder Isocyanat-Mischungen auf MDI Basis nicht möglich, die daher normalerweise mit Diolen, wie Diethylenglykol oder 1 ,4-Butandiol, umgesetzt werden.

Als NCO-reaktive Verbindungen können bevorzugt bei der Herstellung von Polyisocyanat-Polyaddition-Produkten Polyole mit OH-Zahlen in einem Bereich von 10 bis 400, bevorzugt 27 bis 150, besonders bevorzugt 27 bis 120 mg KOH/g, und einer mittleren Funktionalität von 1,8 bis 2,4 eingesetzt werden. Als Polyole können Polyether-, Polyester-, Polycarbonat- und Polyetheresterpolyole verwendet werden.

Polyetherpolyole werden entweder mittels alkalischer Katalyse oder mittels Doppelmetallcyanidkatalyse oder gegebenenfalls bei stufenweiser Reaktionsführung mittels alkalischer Katalyse und Doppelmetallcyanidkatalyse aus einem Startermolekül und Epoxiden, bevorzugt Ethylen- und / oder Propylenoxid hergestellt und weisen endständige Hydroxylgruppen auf. Als Starter kommen hierbei die dem Fachmann bekannten Verbindungen mit Hydroxyl- und / oder Aminogruppen, sowie Wasser in Betracht. Die Funktionalität der Starter beträgt hierbei mindestens 2 und höchstens 4. Selbstverständlich können auch Gemische von mehreren Startern verwendet werden. Des Weiteren sind als Polyetherpolyole auch Gemische von mehreren Polyetherpolyolen einsetzbar.

Polyesterpolyole werden in an sich bekannter Weise durch Polykondensation aus alipahtischen und/oder aromatischen Polycarbonsäuren mit 4 bis 16 Kohlenstoffatomen, gegebenenfalls aus deren Anhydriden sowie gegebenenfalls aus deren niedermolekularen Estern, inklusive Ringestern hergestellt, wobei als Umsetzungskomponente überwiegend niedermolekulare Polyole mit 2 bis 12 Kohlenstoffatomen zum Einsatz kommen. Die Funktionalität der Aufbaukomponenten für Polyesterpolyole liegt hierbei bevorzugt bei 2, kann aber im Einzelfall auch größer als 2 sein, wobei die Komponenten mit Funktionalitäten von größer 2 nur in geringen Mengen verwendet werden, so dass die rechnerische zahlenmittlere Funktionalität der Polyesterpolyole im Bereich von 2 bis 2,5, bevorzugt 2 bis 2,1 liegt. Alternativ können Polyesterpolyole auch durch ringöffnende Polymerisation wie etwa im Fall des ε-Caprolactons hergestellt werden.

Polyetheresterpolyole werden durch Mitverwendung von Polyetherpolyolen bei der Polyesterpolyolsynthese hergestellt.

Polycarbonatpolyole werden entsprechend dem Stand der Technik aus Kohlensäurederivaten, zum Beispiel Dimethyl- oder Diphenylcarbonat oder Phosgen und Polyolen mittels Polykondensation erhalten.

Die Herstellung der Polyisocyanat-Polyaddition-Produkte kann auch in Gegenwart weiterer anorganischer und/oder organischer Füll- und/oder Hilfsstoffe, insbesondere Pigmenten, Gummigranulat, Recyclinggranulat, Fasern, Quarzsteinen, Holzfasern und/oder Sand durchgeführt werden.

Die genannten Polyisocyanat-Polyadditions-Produkte werden als Beschichtung, Bindemittel, Bodenbelag, Haftvermittler, Klebstoff, Spachtelmasse, Wandverkleidung verwendet.

Die genannten Polyisocyanat-Polyadditions-Produkte werden zur Herstellung von Rollen, Rädern, Walzen, Harzen, Formteilen, Sieben, Molchen und Fendern verwendet.

Die genannten Polyisocyanat-Polyadditions-Produkte werden in der Autoindustrie, im Freizeitbereich, im Sportbereich, im Maschinen- und Anlagenbau, in der Elektro- und Elektronikindustrie, im Eisenbahnbau sowie im Bergbau verwendet.

Eine besonders interessante Verwendung der genannten Isocyanat-Mischungen stellt die Herstellung von 1K- und 2K-Beschichtungsmassen dar. Hierbei werden erfindungsgemäß die Isocyanat-Mischungen in Mengen von 6-25 % mit einem Gummigranulat wie beispielsweise SBR, EPDM, Recycling-Granulat der Körnung 0,5 - 50 mm und/oder Fasern der Länge 0,1-50 mm und/oder mineralischen Zuschlagstoffen der Körnung 1-20 mm gemischt und zu einer Elastikschicht für Sportböden verarbeitet. Auch kann die Isocyanat-Mischung in Mengen von 10-25 % mit einem Gummigranulat wie zum Beispiel SBR, EPDM, Recycling-Granulat der Körnung 0,5-50 mm und/oder Fasern, sowie Mischungen der vorgenannten Komponenten gemischt werden und zu Sport-, Freizeit- und Kinderspielplätzen verarbeitet werden. Üblich ist auch die Abmischung in Mengen von 10-15 % mit Quarzsand sowie mit dekorativen Quarzsteinen und Verarbeitung zu Skatingplätzen oder zu (Geh-) Wegen. In Mengen von 10-40 % kann eine Isocyanat-Mischung mit Holzfaserstoffen gemischt werden und für Wege in Natur-Erlebnisparks verarbeitet werden. In Mengen von 8-20% mit einem Gummigranulat gemischt kann es zur Herstellung von sogenannten Zylindern eingesetzt werden, aus denen man Gummimatten für Sport, Freizeit, Kinderspielplätze und Dämmmatten produziert. 15-25% Isocyanat-Mischung in einer Abmischung mit einem Gummigranulat kann zur Herstellung von dekorativen Platten für den Garten und Freizeitbereich verwendet werden. Die Isocyanat-Mischung kann auch in einem 2K-System in den vorgenannten Bereichen eingesetzt werden, wobei die Isocyanat Mischung hierbei in Mengen von 25-50 % als Härter fungiert. In einer Ausführungsform wird die Isocyanat-Mischung in sogenannten 1K- und 2K- Umhüllungsbeschichtungen in Mengen von 7-18 % mit Gummigranulat verwendet. Das resultierende, beschichtete Gummigranulat wird gemäß dieser Ausführungsform als Einstreumaterial im Kunstrasen angewendet.

Die genannten Isocyanat-Mischungen können auch als 1K- sowie 2K- Kleber zur Verklebung von Kunstrasen, Textil- und Holzböden, Dämmmatten, Gummimatten und dekorativen Platten eingesetzt werden. Es können auch 1K- sowie 2K-Spritzbeschichtungen auf Basis der Isocyanat-Mischungen auf elastischen (zum Beispiel Gummigranulatmatten) oder starren Untergründen (z.B. Asphalt oder Beton), die gegebenenfalls 5-80 % an Strukturfüllstoffen (wie SBR-, EPDM, TPE-S-Granulate oder PU-Schnitzel) enthalten, eingesetzt werden. Ebenfalls können 1K- sowie 2K- Haftvermittler oder Grundierungen auf Basis der Isocyanat-Mischungen auf Untergründen, wie zum Beispiel Asphalt, zementgebundenen Untergründen, Holz oder Holzstrich, von Sport-, Freizeit-, Kinderspielbelägen eingesetzt werden. Eine weitere Einsatzmöglichkeit ist in einem 2K-System als Verlaufsbeschichtung auf elastischen oder starren Untergründen, wobei die Applikation ein- oder mehrschichtig sowie gegebenenfalls mit Einstreugranulat (insbesondere EPDM-Granulat der Körnung 0,5-5 mm) erfolgen kann. Auch als 2K-Spachtelmassen für den Porenverschluss von Untergründen können die genannten Mischungen verwendet werden.

Die genannten 1K-Systeme sind feuchtehärtende Systeme. Der Aushärtungsprozess kann bei einem Ortseinbau ("in situ") ohne Zugabe von Wasser (Härtung erfolgt durch Luftfeuchtigkeit) oder in einem industriellen Fertigungsprozess unter gezielter Zugabe von Wasser und gegebenenfalls unter Druck erfolgen.

Die Erfindung soll anhand der nachfolgenden Beispiele näher erläutert werden.

### Ausführungsbeispiele:

Im Folgenden beziehen sich alle %-Angaben auf Gew.-%, soweit nichts anderes vermerkt ist.

### Herstellung der Isocyanat-Mischungen:

Ein Isocyanat-Gemisch wurde in einem Reaktionsgefäß vorgelegt und unter Rühren auf 40 bis 60° C erwärmt. Unter Rühren wurden Polyolverbindungen zugegeben und solange gerührt, bis der theoretische NCO-Gehalt annähernd erreicht wurde, der nach der gewählten Stöchiometrie zu erwarten war. Danach wurde gegebenenfalls der Katalysator zugegeben. Nach einer Zugabe von ggf. Säure als Stabilisator wurde das Reaktionsgemisch abgekühlt.

Die folgende Tabelle 1 zeigt die nach dieser Vorschrift hergestellten Isocyanat-Mischungen der Beispiele 1 bis 5 sowie einige Eigenschaften der mit Luftfeuchtigkeit ausgehärteten 1K-Polyurethane.

**Tabelle 1:**

| | **Beispiel 1** | **Beispiel 2** | **Beispiel 3** | **Beispiel 4 (Vergleich)** | **Beispiel 5** (**Vergleich**) |
|---|---|---|---|---|---|
| **4,4'-MDI** | 18,50 % | 17,63 % | 19,40 % | 17,5% | 26,9% |
| **2,4'-MDI** | 17,90 % | 16,77 % | 15,90 % | 7,5% | 11,5% |
| **2,2'-MDI** | 5,20 % | 4,80 % | 3,97 % | | |
| **Polymeres MDI** | | | | | 4,0 |
| **TDI (80/20)** | | | | 9,8 | |
| **Arco PPG 2000, Polypropylenglykol mit mittlerem MG von 2000 und Funktionalität von 2** | 58,40 % | 55,40 % | 55,34 % | 65,175 | 57,595 |
| **2,2-Dimorpholindiethylether (Aminkatalysator)** | | | | 0,02 | |
| **Benzoylchlorid, als Stabilisator** | | | | 0,005 | 0,005 |
| **Jeffsol PC, Propylencarbonat** | | 5,4 % | 5,4 % | | |
| **NCO-Gehalt [Gew.-%]** | 10,63 | 10,27 | 10,3 | 10,3 | 10,3 |
| **Viskosität bei 21°C [mPas]** | 4392 | 2380 | 2450 | 2899 | 5428 |
| | | | | | |
| **Durchhärtungszeit (21°C, 46% rel. Feuchtigkeit, 0,6 mm Schicht dicke)** | 16 Std. 30 Min. (Grifffest) | 16 Std. (Grifffest) | 15 Std. 30 Min. (Grifffest) | 24 Std. (Grifffest) | 12 Std. (Grifffest) |
| **Beginnende Reaktion mit Luftfeuchtigkeit** | 9 Std. 30 Min. | 9 Std. | 8 Std. 40 Min. | 9 Std. | 6,5 Std. |
| | | | | | |
| **Hydrolysestabilität** (**80°C**) | Sehr gut | Sehr gut | Sehr gut | Sehr schlecht | Sehr gut |
| **Zugfestigkeit [MPa] (nach DIN 53504)** | 20,35 | 21,64 | 24,01 | 10,36 | 17,33 |
| **Reißdehnung** [%] **(nach DIN 53504)** | 522 | 549 | 435 | 477 | 365 |

Im Vergleich zum Beispiel 5 zeichnen sich die Beispiele 1-3 durch eine deutlich später beginnende Reaktion (ca. 40% Verbesserung) aus. Besonders vorteilhaft ist, dass die Aushärtung sich hierbei nur um ca. 30% erhöht und damit noch in einem technisch sinnvollen Bereich liegt. Im Beispiel 4 ist zwar die später beginnende Reaktion mit der in den Beispielen 1 -3 vergleichbar, vorteilhaft ist aber die kürzere Durchhärtungszeit. Ein weiterer wichtiger Vorteil der Beispiele 1-3 ist neben der Tatsache, dass sie TDI frei sind, die deutlich verbesserte Hydrolysestabilität sowie eine höhere Zugfestigkeit bei gleichzeitig höherer Dehnung.

### Herstellung der NCO-Prepolymere:

### Herstellung des NCO-Prepolymers A:

18,89 Gew.-Teile 2,4'-MDI wurden bei 50°C vorgelegt. Danach wurden unter Rühren 81,11 Gew.-Teile eines auf 50°C vorgewärmten Polyesters (hergestellt aus Adipinsäure und Ethylenglykol; OH-Zahl 56) zugegeben. Nach 7 Stunden Reaktionszeit bei 80°C war die Reaktion beendet. Man erhielt ein Produkt mit folgenden Daten:
NCO-Gehalt: 2,98 Gew.-%
Viskosität (70°C): 4800 mPas

### Herstellung des NCO-Prepolvmers B:

26,67 Gew.-Teile 2,4'-MDI wurden bei 50°C vorgelegt. Danach wurden unter Rühren 73,33 Gew.-Teile eines auf 50°C vorgewärmten Polyethers (Terathane® 1000 der Fa. INVISTA; OH-Zahl 112) zugegeben. Nach 2 Stunden Reaktionszeit bei 80°C war die Reaktion beendet. Man erhielt ein Produkt mit folgenden Daten:
NCO-Gehalt: 2,75 Gew.-%
Viskosität (70°C): 5400 mPas

### Isocyanat C:

Isocyanatmischung bestehend aus etwa 36,9 % 2,2'-MDI, 59,2 % 2,4'-MDI und 3,9 % 4,4'-MDI

### Herstellung der Isocyanatmischungen:

Die vorgenannten NCO-Prepolymere wurden in Mengen gemäß der Tabelle 2 mit Isocyanat C vermischt und zur Homogenisierung 1 Stunde bei 80°C gerührt. Man erhielt Mischungen mit den in der Tabelle 2 angegebenen Daten.

**Tabelle 2:**

| Mischung | Isocyanat C | NCO-Prepolymer A | NCO-Prepolymer B | NCO-Gehalt der Mischung | Viskosität der Mischung |
|---|---|---|---|---|---|
| | [Gew.-%] | [Gew.-%] | [Gew.-%] | [Gew.-%] | mPas (70°C) |
| M1 | 3,63 | 96,37 | | 3,94 | 4700 |
| M2 | 10,21 | 89,79 | | 5,97 | 3150 |
| M3 | 3,63 | | 96,37 | 3,82 | 5500 |
| M4 | 10,20 | | 89,80 | 5,85 | 3800 |
| M5 | 16,76 | | 83,24 | 7,85 | 2700 |

In Tabelle 3 sind die Eigenschaften der Gießelastomere, die aus den Mischungen M1 bis M5 sowie M6 und M7 mit Baytec® XL 1604 (von Bayer MaterialScience AG; 3,5-Diamino-4-chloroisobutylbenzoat) hergestellt wurden, angegeben.

### Herstellung der Gießelastomere:

100 Gew.-Teile der Isocyanatmischung wurden bei 90°C unter langsamem Rühren im Vakuum bis zur Blasenfreiheit entgast. Anschließend wurde mit Baytec® XL 1604, welches auf 100°C vorgewärmt war, verrührt. Die homogene Schmelze wurde in auf 110°C vorgewärmte Formen gegossen und für 24 Stunden bei 110°C gehalten. Anschließend wurden die mechanischen Eigenschaften der Gießelastomere gemessen.

M6 ist ein NCO-Prepolymer auf Basis von 2,4'-MDI und Terathane® 1000 der Fa. INVISTA (OH- Zahl: 112). Dieses Prepolymer ist erhältlich von Bayer MaterialScience AG unter dem Namen Desmodur® VP.PU ME 40TF04 (NCO-Gehalt: 3,93 %).

M7 ist ein NCO-Prepolymer auf Basis von 2,4'-MDI und einem Polyadipat (hergestellt aus Adipinsäure und Ethylenglykol; OH-Zahl 56). Dieses Prepolymer ist erhältlich von Bayer MaterialScience AG unter dem Namen Desmodur® VP.PU MS 40TF01 (NCO-Gehalt: 3,95 %).

**Tabelle 3: Herstellung von Gießelastomeren**

| **Beispiel** | | **6** | **7** | **8** | **9** | **10** | **11 (Vergleich)** | **12 (Vergleich)** |
|---|---|---|---|---|---|---|---|---|
| Isocyanatmischung | | M1 | M2 | M3 | M4 | M5 | M6 | M7 |
| Menge Isocyanatmischung | [Gew.-Tle.] | 100 | 100 | 100 | 100 | 100 | 100 | 100 |
| Menge Baytec® XL1604 | [Gew.-Tle.] | 10,6 | 16 | 10,3 | 15,8 | 21,2 | 10 | 10 |
| Gießzeit | [sec.] | 330 | 135 | 495 | 240 | 115 | 480 | 210 |

| **Mechanische Eigenschaften** | | | | | | | | |
|---|---|---|---|---|---|---|---|---|
| Shore A (DIN 53505) | | 92 | 98 | 89 | 97 | 99 | 91 | 92 |
| Shore D (DIN 53505) | | 34 | 47 | 33 | 45 | 56 | 34 | 35 |
| Spannung (100 %) (DIN 53504) | [MPa] | 7 | 9 | 7 | 10 | 13 | 8 | 7 |
| Spannung (300 %) (DIN 53504) | [MPa] | 13 | 17 | 13 | 20 | 28 | 11 | 12 |
| Reißspannung (DIN 53504) | [MPa] | 57 | 53 | 47 | 53 | 49 | 29 | 45 |
| Reißdehnung (DIN 53504) | [%] | 700 | 650 | 550 | 480 | 420 | 600 | 680 |
| Graves (DIN 53515) | [kN/m] | 79 | 100 | 42 | 66 | 91 | 60 | 79 |
| Rückprallelastizität (DIN 53512) | [%] | 41 | 43 | 50 | 47 | 50 | 52 | 43 |
| Abrieb (DIN 53516) | [mm³] | 38 | 49 | 25 | 25 | 40 | 46 | 70 |
| Druckverformungsrest, 22°C (DIN 53517) | [%] | 18 | 28 | 16 | 25 | 36 | 26 | 22 |
| Druckverformungsrest, 70°C (DIN 53517) | [%] | 35 | 52 | 32 | 47 | 66 | 44 | 44 |

Beim Vergleich der Elastomere aus Beispiel 8 und 11 (gleicher NCO-Gehalt der Isocyanatkomponente; gleiches Weichsegment (Polyol)) zeigt sich, dass das genannte Elastomer aus Beispiel 8 eine längere Gießzeit aufweist und insbesondere einen deutlich besseren Druckverformungsrest, eine bessere Elastizität, weniger Abrieb und eine bessere Reißspannung hat. Die mechanischen Eigenschaften des genannten Elastomers sind also deutlich besser.

Der Vergleich der Elastomere aus Beispiel 6 und Vergleichsbeispiel 12 (gleicher NCO-Gehalt der Isocyanatkomponente; gleiches Weichsegment (Polyol)) zeigt, dass das genannte Elastomer aus Beispiel 6 eine deutlich längere Gießzeit, einen besseren Druckverformungsrest, weniger Abrieb und bessere Reißspannung aufweist, so dass das Elastomer aus Beispiel 6 in seinen mechanischen Eigenschaften dem Elastomer aus Vergleichsbeispiel 12 deutlich überlegen ist.

## Patentansprüche

1. Verwendung einer Isocyanat-Mischung mit einem NCO-Gehalt von 2 bis 22 Gew.-%, **dadurch gekennzeichnet, dass** sie
(a) NCO-Prepolymere mit einem NCO-Gehalt von 1,5 bis 18 Gew.-% und
(b) monomeres 2,2'-Diisocyanatodiphenylmethan (MDI) in einer Menge von 1 bis 40 Gew.-%, bezogen auf die Isocyanat-Mischung, enthält,
zur Herstellung einer Elastikschicht für einen Sportboden durch Mischen der Isocyanat-Mischung in Mengen von 6 - 25% mit:
- einem Gummigranulat wie beispielsweise SBR, EPDM, Recycling-Granulat der Körnung 0,5 - 50 mm, und/oder
- Fasern der Länge 0,1 - 50 mm, und/oder
- mineralischen Zuschlagstoffen der Körnung 1 - 20 mm.

2. Verwendung der Isocyanat-Mischung nach Anspruch 1, wobei der Sportboden ein Kunstrasen ist, wobei die Polyisocyanat-Mischung in Mengen von 7 - 18 % in Form einer 1K- und / oder 2K-Umhüllungsbeschichtung auf Gummigranulat aufgebracht wird, wobei die Herstellung der Elastikschicht durch Einstreuen des resultierenden, beschichteten Gummigranulats in den Kunstrasen erfolgt.

3. Verwendung der Isocyanat-Mischung nach Anspruch 1 oder 2, **dadurch gekennzeichnet, dass** die Menge des monomeren 2,2'-MDI 2 bis 25 Gew.-%, insbesondere 2 bis 18 Gew.-%, vorzugsweise 3 bis 15 Gew.-%, beträgt.

4. Verwendung der Isocyanat-Mischung nach einem der vorhergehenden Ansprüche, **dadurch gekennzeichnet, dass** sie Katalysatoren, Aktivatoren, Stabilisatoren, Rheologieverbesserer, UV-Schutzmittel, Hydrolyseschutzmittel, Emulgatoren, Farbstoffe, Farbpigmente und/oder Füllstoffe enthält.

5. Verwendung der Isocyanat-Mischung nach einem der vorhergehenden Ansprüche, wobei zur Herstellung der Isocyanat-Mischung:
A) ein organisches Polyisocyanat mit einer NCO-reaktiven Verbindung im Unterschuss umgesetzt wird, und
B) zu dem unter A) entstandenen NCO-Prepolymer eine Mischung aus 20 bis 70 Gew.-% 2,2'-Diisocyanatodiphenylmethan (MDI), 30 bis 80 Gew.-% 2,4'-Diisocyanatodiphenylmethan (MDI) und 0 bis 10 Gew.-% 4,4'-Diisocyanatodiphenylmethan (MDI) zugegeben wird.

6. Verwendung der Isocyanat-Mischung nach einem der vorhergehenden Ansprüche, wobei zur Herstellung der Isocyanat-Mischung:
A) eine Abmischung aus einer Mischung aus 20 bis 70 Gew.-% 2,2'-MDI, 30 bis 80 Gew.-% 2,4'-MDI und 0 bis 10 Gew.-% 4,4'-MDI und
gegebenenfalls weiteren Polyisocyanaten aus der Gruppe bestehend aus 4,4'-Diphenylmethandiisocyanat (4,4'-MDI), 2,4'-MDI, 2,2'-MDI, polymeres MDI und Mischungen daraus, modifiziertes MDI, Toluylendiisocyanat (TDI), Hexamethylendiisocyanat (HDI), Isophorondiisocyanat (IPDI), H12-MDI (hydriertes MDI) und Abmischungen daraus mit
B) einer NCO-reaktiven Komponente umgesetzt wird.

## Claims

1. A use of an isocyanate mixture with an NCO content from 2 to 22% by weight, **characterised in that** it contains
(a) NCO prepolymers with an NCO content from 1.5 to 18% by weight, and
(b) a monomeric 2,2'-diisocyanatodiphenylmethane (MDI) in a quantity from 1 to 40% by weight, with respect to the isocyanate mixture,
for producing a resilient layer for a sports floor by mixing the isocyanate mixture in quantities of 6-25% with:
- a rubber granulate such as, for example, SBR, EPDM, recycling granulate of grain size 0.5-50 mm and/or
- fibres having a length 0.1-50 mm and/or
- mineral additives of grain size 1-20 mm.

2. The use of the isocyanate mixture according to Claim 1, wherein the sports floor is an artificial turf, wherein the polyisocyanate mixture is applied in quantities of 7-18% in the form of a 1K and/or 2K wrapping coating to rubber granulate, wherein the production of the resilient layer occurs by interspersing the resulting coated rubber granulate into the artificial turf.

3. The use of the isocyanate mixture according to Claim 1 or 2, **characterised in that** the quantity of the monomeric 2,2'-MDI is 2 to 25% by weight, in particular 2 to 18% by weight, preferably 3 to 15% by weight.

4. The use of the isocyanate mixture according to any one of the preceding claims, **characterised in that** it contains catalysts, activators, stabilizers, rheology improving agents, UV protection agents, hydrolysis protection agents, emulsifiers, dyes, colour pigments and/or fillers.

5. The use of the isocyanate mixture according to any one of the preceding claims, wherein, for the production of the isocyanate mixture:
A) an organic polyisocyanate is reacted with an NCO-reactive compound in an insufficient amount, and
B) a mixture of 20 to 70% by weight of 2,2'-diisocyanatodiphenylmethane (MDI), 30 to 80% by weight of 2,4'-diisocyanatodiphenylmethane (MDI) and 0 to 10% by weight of 4,4'-diisocyanatodiphenylmethane (MDI) is added to the NCO prepolymer produced under A).

6. The use of the isocyanate mixture according to any one of the preceding claims, wherein, for the production of the isocyanate mixture:
A) a blend consisting of a mixture of 20 to 70% by weight of 2,2'-MDI, 30 to 80% by weight of 2,4'-MDI and 0 to 10% by weight of 4,4'-MDI, and
optionally additional polyisocyanates from the group consisting of 4,4'-diphenylmethane diisocyanate (4,4'-MDI), 2,4'-MDI, 2,2'-MDI, polymeric MDI and mixtures thereof, modified MDI, toluylene diisocyanate (TDI), hexamethylene diisocyanate (HDI), isophorone diisocyanate (IPDI), H12-MDI (hydrogenated MDI) and blends thereof, are reacted with
B) an NCO reactive component.

## Revendications

1. Utilisation d'un mélange d'isocyanates avec une teneur en NCO de 2 à 22 % en poids, **caractérisé en ce qu'**il comporte
(a) des prépolymères NCO avec une teneur en NCO de 1,5 à 18 % en poids et
(b) 2,2'-diisocyanate de diphénylméthane monomère (MDI) dans une quantité de 1 à 40 % en poids par rapport au mélange d'isocyanates,
pour la production d'une couche élastique pour un sol à usage sportif en mélangeant le mélange d'isocyanates en des quantités de 6 - 25 % avec :
- des granulés de caoutchouc, tels que SBR, EPDM, granulés de recyclage d'une granulométrie de 0,5 - 50 mm, et/ou
- des fibres de 0,1 - 50 mm de longueur, et/ou
- des additifs minéraux d'une granulométrie de 1 - 20 mm.

2. Utilisation du mélange d'isocyanates selon la revendication 1, le sol à usage sportif étant un gazon artificiel, le mélange de polyisocyanates étant appliqué sur les granulés en caoutchouc en des quantités de 7 - 18 % sous forme d'un revêtement 1K et/ou 2K, la production de la couche élastique s'effectuant par dispersion des granulés en caoutchouc revêtus résultant de ce procédé dans le gazon artificiel.

3. Utilisation du mélange d'isocyanates selon la revendication 1 ou 2, **caractérisé en ce que** la quantité de 2,2'MDI monomère représente 2 à 25% en poids, notamment de 2 à 18 % en poids, de préférence 3 à 15 % en poids.

4. Utilisation du mélange d'isocyanates selon l'une quelconque des revendications précédentes, **caractérisé en ce qu'**il comprend des catalyseurs, activateurs, stabilisateurs, agents améliorant la rhéologie, protecteurs anti-UV, agents anti-hydrolyses, émulsifiants, colorants, pigments de couleur et/ou agents de remplissage.

5. Utilisation du mélange d'isocyanates selon l'une quelconque des revendications précédentes, les étapes suivantes étant réalisées pour produire le mélange d'isocyanates :
A) Mise en réaction d'un polyisocyanate organique avec une quantité déficitaire d'un composé réactif au NCO, et
B) Ajout d'un mélange de 20 à 70 % en poids de 2,2'-diisocyanate de diphénylméthane (MDI), de 30 à 80 % en poids de 2,4'-diisocyanate de diphénylméthane (MDI) et de 0 à 10 % en poids de 4,4'-diisocyanate de diphénylméthane (MDI) au prépolymère de NCO produit sous A).

6. Utilisation du mélange d'isocyanates selon l'une quelconque des revendications précédentes, les étapes suivantes étant réalisées pour produire le mélange d'isocyanates :
A) Un mélange d'un mélange de 20 à 70 % en poids de 2,2'-MDI, de 30 à 80 % en poids de 2,4'-MDI et de 0 à 10 % en poids de 4,4'-MDI et
le cas échéant d'autres polyisocyanates du groupe composé de 4,4'-diisocyanate de diphénylméthane (4,4'-MDI), de 2,4'-MDI, de 2,2'-MDI, de MDI polymère et de mélanges de ceux-ci, de MDI modifié, de diisocyanate de toluène (TDI), de diisocyanate d'hexaméthylène (HDI), de diisocyanate d'isophorone (IPDI), de H12-MDI (MDI hydrogéné) et de mélanges de ceux-ci
B) est mis en réaction avec un composant réactif au NCO.
